# EUROPEAN PATENT SPECIFICATION

(11) **EP 3 303 919 B1**
(45) Date of publication and mention of the grant of the patent: **28.10.2026**
(21) Application number: 16733671.8
(22) Date of filing: 03.06.2016
(51) Int. Cl.: F22B 31/08, F22B 37/02

(54) **TURBINE SYSTEM AND METHOD**
TURBINENSYSTEM UND VERFAHREN DAFÜR
SYSTÈME DE TURBINE ET PROCÉDÉ

(30) Priority: 03.06.2015 GB 201509651
(43) Date of publication of application: 11.04.2018
(73) Proprietor: Castle European Limited, Edinburgh EH2 4DF (GB)
(72) Inventor: KOVACEVIC, Aleksandar, Beograd 11000 (RS)
(74) Representative: Marks & Clerk LLP
(86) International application number: PCT/GB2016/051655
(87) International publication number: WO 2016/193759

(56) References cited:
- JP-A- 2007 205 188
- JP-A- 2012 132 618
- JP-A- 2012 163 265
- US-A- 5 293 841
- US-A- 5 713 195

## Description

### Field of the Invention

The present invention relates to the provision of power generating systems employing a condensing steam turbine fed with steam from a boiler, in particular to those employing biomass as fuel, or primary fuel, to the boiler.

### Background to the Invention

Conventional steam cycle power plants using condensing steam turbines use steam extraction from the steam turbine to heat up boiler feed water to the appropriate temperature for use in the boiler.

In fossil fuel boilers, the appropriate temperature tends to be relatively high in order to avoid acid condensation at the entry/ exit surfaces of the boiler.

Biomass fuel has the advantage of being virtually free of sulphur and other acidifying substances and so the risk of acid condensation is greatly reduced. The boiler vessel is pressurized and the flame temperature regulated in order to control NOx formation that may create a risk of acid condensation. Therefore, the deviation (condensation) point of the system remains at a relatively high temperature.

Modern boilers utilize energy from flue gases to the greatest extent possible. In circumstances where the flue gas is sufficiently free from acidifying substances, such as with biomass burning systems, and regulated flame temperature, the system may even provide for complete condensation of flue gas. Condensation of the flue gas provides an opportunity to utilize the latent heat of the fuel and allows for Low Heating Value (LHV) thermal efficiencies greater than 100%.

Nevertheless, despite the range of options available for producing power from steam cycle power plants there remains the desire to provide improvements in terms of efficiency, flexibility, emissions and scalability.

Environmental considerations especially in respect of carbon dioxide emissions are also increasingly relevant in terms of power plant design.

JP2007205188A describes a heat pump using waste heat of an energy supply facility such as a steam turbine bearing cooling installation and a condenser cooling system as a heat source; a heat exchanger for heating boiler combustion air; directly or indirectly recovering heat pumped up by the heat pump to boiler combustion air as heat medium fluid; and a heat exchanger installed in an inlet side of an air pre-heater in a boiler intake system. Also, it describes that since heat recovery quantity in a boiler exhaust side reduces by raising temperature of a boiler intake side, a heat exchanger should be provided in a boiler exhaust gas system for recovering heat medium fluid that is recirculated to the heat exchanger in a boiler intake side to recover heat to an intake side.

### Description of the Invention

The present invention provides a power generating system comprising:
a boiler, a heat pump system and a condensing steam turbine configured to be fed with steam from the boiler, wherein the power generating system is configured such that the air supply for the boiler combustion process is preheated by means of the heat pump system before entry to the boiler; characterized in that the heat pump system comprises at least one variable drive compressor, and in that the at least one variable drive compressor is operable to maintain boiler combustion conditions.

The preheating of the air supply may be carried out by means of a heat pump or heat pumps of the heat pump system, extracting heat from an energy source, for example a low grade energy source. Advantageously the low grade energy source is the cooling system employed to condense the steam from the condensing steam turbine. In typical condensing steam turbine systems this source of low grade heat is, typically, a water based cooling system (the "steam cycle cooling water"). The heat extracted from the condensing steam is normally either lost to a cooling arrangement such as a cooling tower or may be used for local heating (e.g. a district heating system).

Any other low grade energy source (a "waste heat" source) may be employed to provide low grade energy for upgrading via the heat pump system. More advantageously more than one energy source, typically energy sources of the power generating system, is employed to provide energy for upgrading by the heat pump system. For example low grade energy may be supplied from a flue gas cooling and condensation process of the power generating system; such as described further hereafter with reference to particular embodiments. Other energy sources associated with the power generating system can include one or more of: waste heat from rotating equipment (such as a generator powered by the steam turbine or a generator powered by an engine or other means for starting up and/or augmenting the power generating system); waste heat from transformation equipment (the transformer or transformers supplying the electrical power produced by the system); rejected heat from cooling the steam turbine itself (from lubrication etc); and rejected heat from ash disposal.

Use of two or more of these energy sources as a supply to the heat pump system improves efficiency.

The heat pump system may include an energy storage device, such as a tank of water, for storing thermal energy. This can add to the flexibility of the heat pump system and hence of the power generating system as a whole.

Other sources of low grade heat may be employed as an alternative to or additionally to the heat from the cooling system for the condensing steam turbine and the other options described above that are derived from the plant processes of the energy generating system. For example, energy from thermal solar (e.g. via one or more solar panels) or geothermal sources or from cooling systems employed in factory processes. Utilising the heat from cooling system employed to condense the steam from the condensing steam turbine advantageously raises the efficiency of the steam cycle.

Preheating the air supply to the combustion process in the boiler provides a number of advantages. Boilers are typically designed to pre-heat the incoming air prior to entry to the combustion process, by exchange of heat with the flue gas within the boiler. As the flue gas must be kept at a sufficiently high temperature to avoid problems e.g. with corrosion caused by condensation and acid gases, each boiler is designed to cope with expected local conditions in terms of ambient air temperature. There must be sufficient capability to heat the air, even in cold conditions and still maintain an acceptable flue gas temperature to allow exhaust without causing difficulty.

Heating the air supply to a selected temperature or temperature range by means other than a boiler or flue gas from the boiler is preferred as this allows the boiler design to be the same for different locations, having different climatic conditions or altitude.

Use of a variable drive heat pump (i.e. a heat pump with a variable drive compressor or compressors) is convenient in allowing the heat supplied to the air to be adjusted to provide the desired heated air input to the boiler regardless of climatic conditions or other variables.

More generally, the heat pump system employed will typically comprise a plurality of heat pumps. The use of more than one heat pump is convenient. The heat pumps may be employed in parallel and/or in series to provide the required upgrading of the heat quality. The output of the heat pump system may be adjusted as desired by taking one or more pumps offline or putting one or more pumps online. One or more pumps may be taken offline for repair or replacement without requiring shutdown of the heat pump system. Each heat pump of the heat pump system will have one or more compressors. For fine control of the heat pump system, at least one variable drive heat pump is employed. More preferably all the heat pumps employed are variable drive (each has a variable drive compressor or compressors). The number and size of heat pumps depends on the duty required e.g. on the size of the boiler or boilers of the power generating system. Boilers typically have several air inlets, to aid in providing a smooth and efficient combustion process. Advantageously the heat pump system includes at least one heat pump for each air inlet of a boiler.

The working fluid for heat pumps employed in the system may be of several kinds of refrigerant including halocarbon fluids, organic fluids, ammonia and carbon dioxide. For the temperature and pressure conditions envisaged for power generating systems of the invention (typically heating ambient air from 11°C to over 90°C , carbon dioxide is especially useful as it operates at high working pressures and temperatures than other working fluids, providing efficient energy transfer. As heat pumps or heat pump systems employed in the invention may operate with a relative Coefficient of Performance (COP) of more than 3.6 when suitable temperature difference between the input and output is available, high efficiencies in comparison with other energy recycling techniques may be achieved.

Heating the air supply raises the temperature of the output flue gas from the boiler. Controlling the air supply temperature, results in an air temperature that is constant and independent of weather and atmospheric pressure conditions. This makes the flue gas a reliable source of high grade energy (heat) that may be utilised. Advantageously the heat of the flue gas is used to heat the boiler feed water (condensate returning from the turbine and, optionally, any make up water employed). The increased temperature of the flue gas can allow the boiler feed water to be pre-heated from what would otherwise be a comparatively low boiler water inlet temperature, and brought up to the required/desired temperature for feeding the boiler, without using the conventional approach of supplying additional energy from steam extracted from the turbine i.e. steam diverted from the turbine to heat the boiler feed water.

This allows a condensing steam turbine that does not require a steam extraction facility to be used in the system. This is advantageous as the turbine arrangement is simpler and able to extract more energy from a given volume of steam. For example it is not at a raised height to allow the downwards extraction of steam. Otherwise condensing steam turbines of the systems described herein may be conventional. Typically a high pressure steam turbine stage is fed with high pressure steam from the boiler. The used steam is returned for reheating in the boiler and then fed into lower pressure turbine stages, typically an "intermediate pressure" and then a "low pressure" stage. The steam exiting from the turbine stages is then condensed, and the condensate heated and pressurised for reuse in the boiler, to generate more steam. In this turbine arrangement more useful energy is extracted from the low pressure section than in a conventional steam turbine arrangement with steam extraction. This is advantageous as it allows the extraction of energy in a format that is aligned with the steam production profile of boilers dedicated to low grade fuels, such as biomass. This arrangement also removes the requirement to start the steam expansion process in the turbine at very high steam pressure and temperature. This is advantageous as it results in comparatively higher steam cycle efficiency; at moderate steam parameters and without the need for special or high grade materials of construction.

As steam is not extracted from the turbine, less input steam is required to achieve the same power output and so the boiler can be relatively smaller and using less materials than when making use of a conventional boiler and turbine arrangement.

When using the flue gas to heat the boiler feed water, it is energy efficient to condense the water contained in the gas. Preferably to fully or substantially fully condense the water contained in the gas. This may be achieved for example, by providing a two stage arrangement, preferably external to the boiler as a separate unit, wherein the condensate returning from the turbine first exchanges heat in a condenser/scrubber arrangement for the flue gas and then exchanges heat with the flue gas exiting from the boiler in a pre-cooler for the condenser/scrubber.

The condenser/scrubber condenses the water present in the flue gas and can remove ash or other undesirable contaminants from the combustion process. Thus the flue gas becomes two streams, gas and water. Both will contain some low grade heat which may for example be used to dry or pre-heat the fuel supplied for the boiler, especially if this is a biomass fuel such as wood chips. More generally low grade heat from a flue gas cooling and condensing system may be used as part of the heat pump system of the power generating system for any duty such as heating the air supply to the boiler, feed water heating or the option of supplying heat to dry biomass.

The arrangements described herein are particularly suited to biomass burning boilers, in particular fluidised bed boilers that can burn biomass such as (partially) dried wood chips without requiring special treatments such as milling, other than an appropriate degree of drying. Burning biomass does not produce substantial quantities of acid gases, as occurs with fossil fuels, and therefore equipment such as the advantageous precooling and condensing/scrubbing arrangements described herein do not have to be designed to cope with such corrosive materials. Biomass may be employed as the only or the primary fuel, for example a boiler may burn biomass such as wood. However a biomass boiler may also burn other fuel in conjunction with biomass (co-firing in the boiler), for example coal, lignite, municipal solid waste (MSW), refuse derived fuels (RDF), other refuse, and agricultural biomass/ non-woody biomass.

If there is intention to co-fire other fuels with woody biomass (such as coal, lignite, agriculture or refuse fuels) that may be arranged by varying the boiler fluidized bed composition to the extent it is able to absorb acidity contained in the fuel mixture. In the case where any additional particulates may be expected in the flue gas stream, an appropriate electrostatic precipitator (ESP) may be introduced between the boiler flue gas outlet and the flue gas condensing arrangement.

The power generating system is suited to the generation of electrical power, in which case the condensing steam turbine can be coupled to an electrical generator in the usual way. A transformer arrangement can then be used to supply power to the electricity grid in the conventional manner. A further refinement of the system may be to make use of the heat energy provided from cooling the turbine, and/or the generator and/or the transformer to pre-heat the condensate (feed water) from the condensing steam turbine, before it is heated by the flue gas. This additional heating (energy recycling) may be directly (by heat exchanger) or by means of a heat pump. The heat pump or pumps employed may be a stand-alone item. Conveniently the heat pump or pumps are part of the heat pump system used for heating the air supplied to the boiler.

Generally, energy (low grade) collected from any part of the power generating system may be upgraded by heat pumps of the heat pump system and the upgraded energy used to heat the air being fed to the boiler and/or be used for other duties such as to (pre-)heat the condensate (feed water) from the condensing steam turbine. Other duties may include drying of fuel and/or the supply of heat to a district heating arrangement.

Thus the heat pump system may also use low grade heat from at least one of other points where heat is wasted / dissipated / rejected to provide additional heat for preheating feed water or combustion air through heat pumps. This includes heat wasted / dissipated / rejected from ash, other rotating equipment (flue gas fans, other fans, feed water pumps, mechanical drives, etc) and electrical equipment (such as resistors, transformers etc).

Flexibility in addressing variable characteristics of the inputs of fuel and air is desirable to be able to provide/operate a standardised combustion process within the boiler. Therefore in order to respond to variable fuel characteristics (moisture and chemical composition), provide variable load and optimize efficiency at partial load; all electrical mechanical drives may be equipped with variable frequency controllers.

Thus a convenient arrangement provided by another aspect of the invention is a power generating system comprising;
a fluidised bed boiler for burning biomass; and
a condensing steam turbine fed with steam from the fluidised bed boiler;
wherein the air supply for the fluidised bed boiler combustion process is preheated before entry to the boiler by means of a heat pump system comprising at least one heat pump that extracts energy from at least one of:
the cooling system used to condense the steam from the turbine; and
a cooling system used to recover heat from the flue gas from the boiler; and
   wherein the flue gas from the boiler is used to heat the boiler feed water.

The primary fuel for the boiler in this arrangement is biomass, but other fuel may be employed, co-fired in the boiler, as discussed above.

Conveniently the heat pump system may extract all the energy required to heat the air supply from the cooling system used to condense the steam from the turbine, or from the cooling system used to recover heat from the flue gas of the boiler. Typically, the heat pump system extracts energy from at least: the cooling system used to condense the steam from the turbine and from a cooling system used to recover heat from the flue gas from the boiler.

The heat pump system may supply heat to duties additional to heating the air supply to the boiler, for example to heat the condensate returning to the boiler, typically as a pre-heat stage before further heating with the flue gas, by means of a flue gas cooling and condensing system as described above.

With such arrangements a decrease in boiler size of say 20% or more may be envisaged in comparison with a conventional steam cycle plant with the same power output.

The further optional features discussed above with respect to the invention may also be employed with this convenient arrangement of a power generating system. For example the condensing steam turbine may be employed to drive an electricity generator in the conventional way.

By combining the use of a heat pump to preheat the air feed to the boiler and condensing the flue gases an increase in efficiency from a typical prior art steam cycle efficiency of 92% to above 100% may be obtained . A Low Heating Value (LHV) thermal efficiency as high as 110%, when heat recovery is taken into account, may be achievable with the systems described herein. Thus a boiler and condensing steam turbine system such as described herein has improved efficiency. Assuming a turbine efficiency of 42% or more the boiler/turbine system may have an improvement in efficiency of from say 39% for a conventional arrangement to 45% or more with an arrangement as described herein, depending on composition and qualities of selected equipment.

The power generating systems described herein are flexible in comparison to prior art arrangements. Usually options for control include altering the rate of supply of fuel and air for combustion in the boiler, and altering the feed rate of water for boiling. With the combination of using a heat pump to preheat the air feed to the boiler and obtaining heat by condensing the flue gases, both air input temperature and feed water temperature may also be adjusted to suit the desired output. This flexible arrangement may be described as an integration of the compression cycle of the heat pump (for the refrigerant employed) with the main steam cycle to form a "Co-integrated Steam and Compression Cycle (CSCC ^{®})".

Particular flexibility is obtained by not using steam extraction from the turbine to heat the condensate returning to the boiler, especially when combined with both the use of the heat pump system's control of the air temperature into the boiler and the option of using a heat pump to provide some heat to the condensate. Rapid fine adjustment of air and water feed to the boiler may be made, to maintain the boiler combustion conditions irrespective of input (ambient) air temperature, and fuel quality. At the same time the output to the grid is readily adjusted as the heat pump system can be rapidly adjustable. Therefore, the boiler - turbine arrangement becomes flexible enough to provide variable electrical output to the grid including variations in power factor and frequency control.

The power generating systems described herein are scalable. A biomass boiler and condensing steam turbine arrangement based on a boiler output of from say 85 MWₜ to 300 MWₜ or more may be utilised. Systems with larger boilers and turbines may provide improvement in efficiency. It will also be appreciated that the power generating systems are not restricted to arrangements with one boiler and one condensing steam turbine. Thus for example combinations feeding more than one turbine (for example two turbines) from one boiler may be envisaged, as well as arrangements where more than one boiler is employed to provide steam for more than one turbine. In each arrangement the heating of air to each boiler and the use of heat pump technology to recover heat from turbine condensate cooling systems, flue gas cooling and condensing systems and other low grade heat sources such as described above, may be employed.

Where a biomass boiler or a boiler primarily using biomass as fuel is used and the flue gases cooled and condensed effectively the output flue gases are relatively concentrated in carbon dioxide, contain little in the way of acid gases or other contaminants, and have a relatively low temperature, say of the order of 20 to 50°C or even lower if used for biomass drying duty or other duty as a supply of heat to the heat pump system. Such a gas stream lends itself to carbon capture. Therefore the system may further include a carbon capture unit to capture carbon dioxide. For example, by absorbing the carbon dioxide in a suitable solvent. The absorbed CO₂ may be liberated from the solvent and compressed for transportation and storage. Other methods for separating CO₂ may be employed such as high pressure membrane filtration, adsorption/desorption processes and cryogenic separation. As a biomass burning boiler using sustainable biomass is in principle carbon neutral, the addition of a carbon capture unit can render the power generating system carbon negative. Where the CO₂ is captured, heat recovery from that process may be utilized, optionally with the use of a heat pump to upgrade the quality of heat, in the power generating systems described herein; or for other applications requiring heat.

The present invention also provides a method for generating power, the method comprising:
providing a power generating system comprising a boiler, a heat pump system and a condensing steam turbine configured to be fed with steam from the boiler, wherein power generating system is configured such that the air supply for the boiler combustion process is preheated by means of a heat pump system before entry to the boiler, to maintain boiler combustion conditions; and feeding the condensing steam turbine with steam from the boiler.

The method makes use of the power generating systems described herein including any or all of the optional features. For example the use of a heat pump extracting heat from a low grade energy source. The low grade energy source may be the cooling system employed to condense the steam from the condensing steam turbine or any of the other low grade energy sources associated with the power generating systems described herein.

Other sources of low grade heat, not directly associated with the power generating system may be employed as an alternative to or additionally to heat from the cooling system for the condensing steam turbine. For example energy from solar or geothermal sources or from cooling systems employed in factory processes.

The condensing of flue gases from a combustion system, allows recovery of heat both from the cooling of the gases and the latent heat of the condensation phase change. Combining this heat recovery with the use of a heat pump or heat pumps to upgrade low grade heat obtained from the cooling procedure and provide effective active cooling can find application in any system where flue gases are available.

Thus the present invention provides a method for extracting heat from the gases of a combustion process, the method comprising:
cooling the gases by heat exchange to condense the water present and upgrading the heat extracted from at least the condensation phase change by means of a heat pump.

Active cooling is employed, by using at least one variable drive heat pump and at least one variable circulation pump for a heat exchanger.

Conveniently a two stage method is employed for cooling the gases. A two stage arrangement, preferably external to a boiler producing flue gas or other source of gas from a combustion process, may be provided as a separate unit. The gas is first cooled to extract high grade heat by a first heat exchanger system and then cooled to condensation temperature by a second heat exchange system.

More than two stages of heat exchange may be employed to reach the condensation temperature.

A condenser/scrubber arrangement may be employed as the second heat exchange system.

At least one heat pump is employed to upgrade the heat obtained from the condensation stage. This allows the heat recovered to do more useful work. For example as described herein with respect to biomass boiler power generation systems.

Optionally the remaining heat in the gas from a combustion process after it has been cooled to the condensation point may be utilised. As the gas becomes two streams, gas and water and both will contain some low grade heat, this heat may be used. A further heat exchanger or heat exchanger may be used to upgrade the residual heat obtained from the gas or condensate streams.

This method of extracting heat may be utilised with gases from combustion processes in general, with energy saving benefits depending on the situation. Use with the biomass systems described herein is particularly convenient and adds flexibility to a power plant.

Other uses of the method can include with internal combustion engine gases ("exhaust gases"). Where an internal combustion engine is employed to drive an electrical power generator, heat may be extracted from the exhaust gases as well as from the cooling system for the engine. An example is described below.

Power generating systems such as the boiler and turbine arrangements described herein, and combustion power plants employing boiler systems in general, require an electrical supply for start-up. Electricity is required before the boiler and associated turbine are running at operational levels. The electricity can be supplied from the electricity grid, but only where a grid electricity supply is available.

Desirably an electricity generating power plant has a "black start" capability. The plant is equipped to start up without the need for external input of electrical power. This can be achieved by the provision of an internal combustion engine (or combustion turbine, or a fuel cell) powering an electrical generator (all of these options may be in single or multiple assemblies in parallel operation), for use in start-up procedures. An engine, typically a gas powered piston engine has the benefit of being flexible, the power output is readily adjusted to cope with a varying load. Other liquid or gaseous fuels may be employed, for example diesel, biodiesel, natural gas, synthetic gas, bio-gas, heavy fuel oil (HFO,) Liquid Petroleum Gas (LPG), Liquid Natural Gas (LNG), hydrogen, etc.

The internal combustion engine may be used for power generation not only on start-up, but as a means of increasing the flexibility of the plant. Additional power may be added to the output of the electricity generating plant as a whole, by running the engine. As an engine/generator system is flexible in output, the engine system can give the ability to add incrementally to the overall output of the plant.

Advantageously the heat from the engine cooling system is extracted, by a heat exchanger, for use in heating. For example, to heat the air and/or water input to a boiler. Advantageously the method described above for extracting heat from gases of a combustion engine is employed with the exhaust gas from the engine. Thus the engine may be provided with a two stage arrangement. The exhaust gas is first cooled to extract high grade heat by a first heat exchanger system and then cooled to condensation temperature by a second heat exchange system. At least one heat pump may be used to upgrade the heat from the condensation step to allow useful work to be done. The heat pump may be one used for scavenging heat from other low grade sources of heat or may be dedicated to this duty. The heat pump may be stand alone or part of the heat pump system of the power systems of the invention.

As well as the method for extracting heat from flue gases the present invention provides an apparatus for extracting heat from gases of a combustion system comprising:
a heat exchange system to cool the gases to the condensation temperature; and
at least one heat pump for upgrading the heat extracted from at least the condensation phase change.

Heat extracted from the engine during its operation may be used to heat combustion air or feed water (condensate) directly and immediately or may be stored in an appropriate heat storage device for later use. Heat rejected from the engine may be used to supplement the power generation process within the main thermal cycle of the plant described above.

The apparatus may include any or all the features discussed above in respect of the method and of the power generating systems described herein.

### Brief Description of the Drawings

Figure 1 shows a power generating system in schematic view;
Figure 2 shows a simplified schematic drawing of a power generating system as a block diagram; and
Figure 3 shows a simplified schematic drawing of a power generating system as a block diagram, highlighting the recovery of low grade heat for upgrading in a heat pump system.

### Description of Some Preferred Embodiments

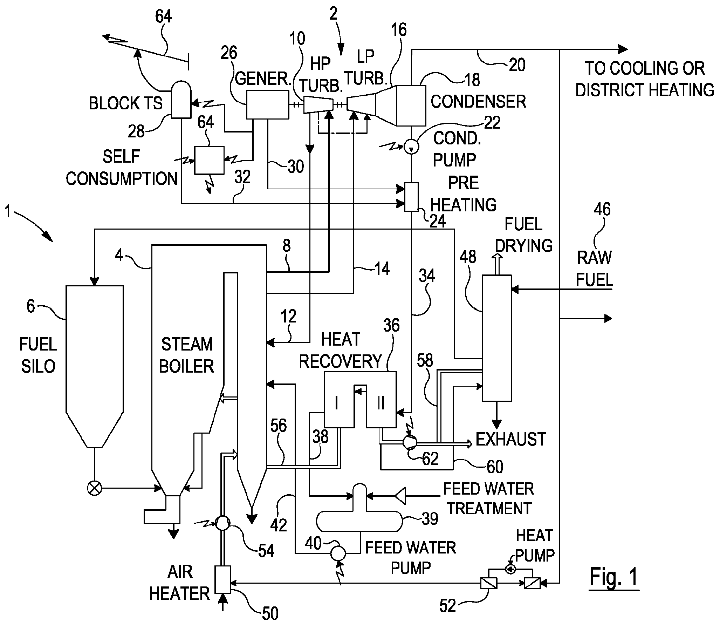

Figure 1 is a schematic illustration of a power generating system 1 that includes a condensing steam turbine arrangement 2 fed with steam from a boiler 4, in this example a fluidised bed boiler burning a biomass such as wood chips, at least as the primary fuel.

### Steam cycle

The steam cycle operating in the system 1 can be described as follows. Biomass fuel from the fuel silo 6 is burned in air in the fluidised bed boiler 4. The heat is used in the boiler to boil water and generate high pressure steam which is fed from boiler 4 via line 8 to drive the high pressure turbine 10 (HP, TURB.) of the turbine 2. Used steam is returned to boiler 4 via line 12 for reheating in the conventional manner. The reheated steam is then supplied via line 14 to the low pressure turbine(s) 16 (LP. TURB.) of the turbine 2. Typically an "intermediate" and a "low" pressure turbine system is employed to maximise extraction of power. The steam exiting from the low pressure turbine(s) 16 is condensed in condenser 18 by use of a cooling water system indicated by line 20.

The condensed steam is pumped by condensate pump 22 through a preheating heat exchanger 24 that makes use of heat extracted from the cooling systems for electrical generator 26 and transformer 28, as suggested by lines 30,32.

The condensate is then fed via line 34 to be heated further in a heat recovery system 36 making use of flue gas from boiler 4 as described further hereafter under the heading Flue Gas. Finally the heated condensate is pressurised and returned - via line 38, storage tank 39 (the "drum"), feed water pump 40, and line 42 - to boiler 4 for conversion back to steam. Any required make up water is delivered from the feed water treatment plant 44.

### Fuel

The fuel supply in this example is wood chips. A fluidised bed combustion system is employed in boiler 4 that does not require special processing, such as milling, of the raw fuel. The raw fuel 46 is however dried in a fuel drying plant 48 before being fed to silo 6 that feeds the combustion process in boiler 4. A moisture content in the range of about 9 to 50% is suitable for the system envisaged, but is not critical.

### Air Supply

The air supplied to boiler 4 via air heater 50. The air is heated in air heater 50 by means of variable drive heat pump or pumps 52 which extracts heat from the cooling water system (line 20) for the condenser 18 of the turbine 2. The heated air is then pumped into boiler 4 via fan or fans 54. Other sources of relatively low grade heat may be employed alternatively or additionally. However use of the condenser turbine cooling water system increases the extraction of energy from the steam cycle improving efficiency. This arrangement allows the air to the boiler 4 to be supplied at a consistent temperature, essentially regardless of ambient air temperature and without requiring heat exchange inside the boiler, with exiting flue gas, as is typically employed.

### Flue gas

The flue gas exits from boiler 4 via line 56 to heat recovery unit 36. As a consequence of the supply of heated air to boiler 4 the flue gas is consistent in temperature and somewhat hotter than in a conventional arrangement where ambient temperature air is fed into the boiler and heated by flue gas as it exits. The heat recovery unit 36 treats the flue gas in two stages. In stage I the flue gas exiting from the boiler 4 is pre-cooled by exchanging heat with the condensate returning to the boiler from the condenser turbine 18. In stage II a condenser scrubber unit condenses the steam in the flue gas and removes ash. The cooling and condensing of the flue gas in stage II of heat 55383021-1 recovery unit 36 is obtained by heating the condensed steam returning to the boiler via line 34.

Thus the flue gas becomes two streams, gas and water. Both contain some low grade heat (having a temperature of about 40C for example) and either or both are fed to fuel drying unit 48 (via lines 58, 60 and pump 62) to dry the fuel supplied for the boiler.

### Power output

In this example the condensing steam turbine 2 drives generator 26 to produce electricity, which is converted by transformer 28 to a suitable form for supply to the grid 64. A portion of the power generated is used for "self-consumption" 64 for example used to power pumps such as 22, 42, 54 and 62; and heat pump 52.

The energy efficiency and the lack of sensitivity to ambient conditions of the arrangement of figure 1 described above allows the use of a standardised and more compact power generating system to produce a given power output than can be realised with previous known arrangements.

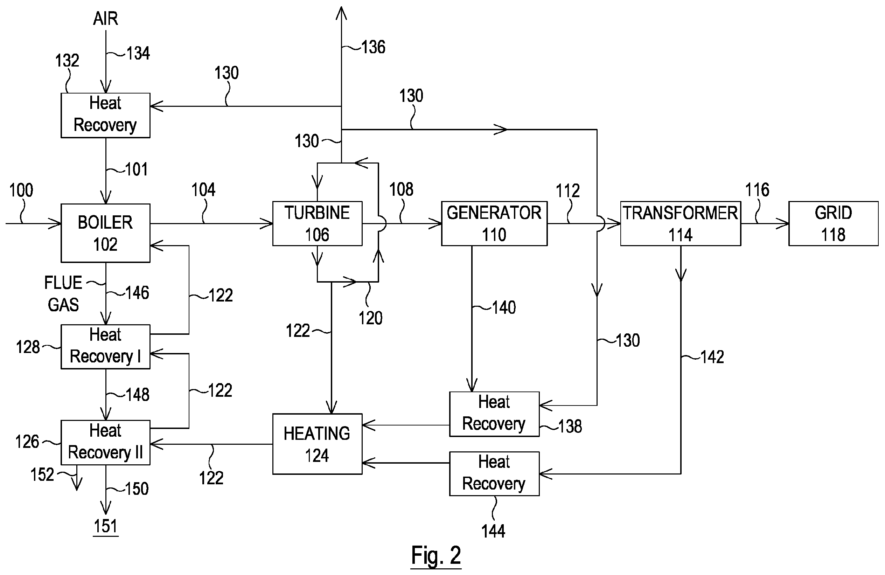

Figure 2 shows a power generating system akin to that of figure 1 as a schematic block diagram, generally indicating the mass and energy flows.

In figure 2 fuel 100 and heated air 101 is supplied to boiler 102. Steam 104 generated by burning the fuel in the boiler 102 is fed to the turbine 106. Mechanical power 108 from the turbine 106 drives generator to produce electricity 112 which is adjusted by transformer 114 to be suitable as electricity supply 116 to grid 118.

Spent steam from turbine 106 is condensed by cooling circuit 120 to provide condensate 122, which is returned to the boiler 102 via pre-heater 124 and flue gas heat recovery units II (126) and I (128). The condensate 120 will also be pressurised to provide a feed to the boiler that is at an appropriate temperature and pressure.

Cooling circuit 120 (typically a water cooling circuit) provides relatively low grade heat 130 which is used in a heat recovery unit 132 (by means of a heat pump arrangement) to heat incoming air 134 for the boiler 102, providing heated air 101. The heat 130 from cooling circuit 120 may also be employed as an external heat supply 136, for example for district heating. A yet further use of heat 130 may be to supply heat via heat recovery unit 138 to the pre-heater 124 which heats condensate 122 from the turbine 106. Heat recovery unit 138 may also be supplied with heat 140 from a cooling circuit for generator 110. In this example heat 142 is also recovered, from a cooling circuit used to cool transformer 114 and fed via another heat recovery unit 144 to pre-heater 124.

Flue gas 146 emanating from the boiler 102 is pre-cooled in heat recovery unit I (128) by the returning condensate 122. The pre-cooled flue gas 148 is then further cooled and water present in the stream condensed out in heat recovery unit II (126), which also makes use of the returning condensate 122 as coolant. The cooled dried flue gas 150 emanating from heat recovery unit II (126) may then be used further for drying fuel as shown in the arrangement of figure 1. The cooled dried flue gas 150 may then be processed in a carbon capture unit 151 to recover the carbon dioxide. Condensate 152 obtained from the flue gas may also be utilised, for example, for drying fuel as shown in figure 1.

In this example heat recovery in unit 132 is by means of a heat pump as part of a heat pump system. It will be understood that other heat recovery in systems of the invention may, in each instance, be by making use of heat exchangers, heat pumps or both heat exchangers and heat pumps in combination.

For example, the heat recovery units in any one of units 126, 128, 138 and 144 shown in figure 2 may use heat exchangers, heat pumps or both heat exchangers and heat pumps.

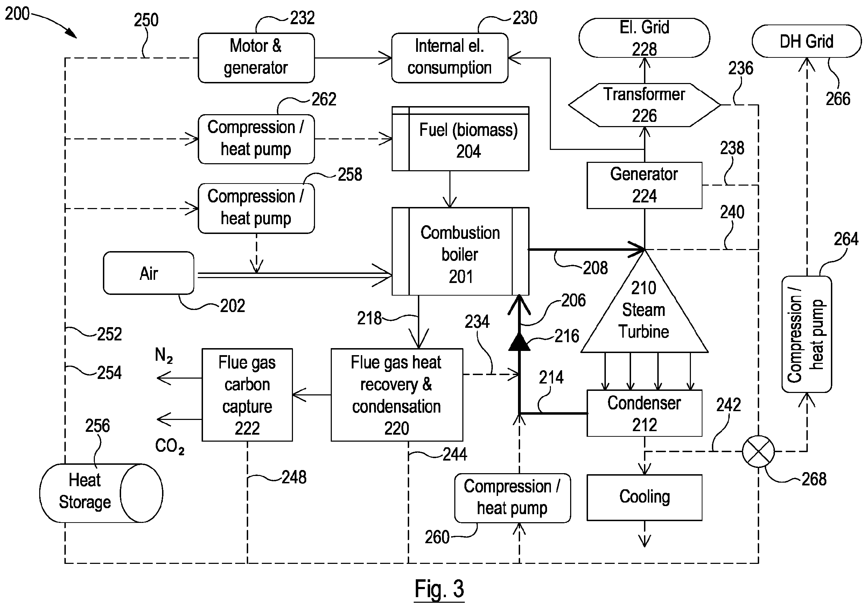

Figure 3 shows in a simplified schematic block diagram features of a power generating system 200 of a general type similar that of figure 1. This illustration is focussed on the recovery of low grade energy for a heat pump system. In this example the heat pump system collects low grade heat from several sources and in turn uses heat pumps to upgrade the heat to perform several useful heating functions.

### Steam Cycle

The power generating system includes a combustion boiler 201 fed with air 202, fuel 204 and heated pressurised water 206. Steam produced by the boiler 200 is fed by line 208 to the steam turbine 210. The spent steam is condensed in condenser 212 and returned by line 214, including compression pump 216 to the boiler 201 for reuse.

### Flue gas

The flue gas (line 218) from the boiler 201 is cooled and condensed in a unit 220 such as the two stage heat recovery unit 36 described above with respect to figure 1. The remaining gases (mostly nitrogen and carbon dioxide) following condensation may progress to optional carbon capture unit 222.

### Power output

In this example the condensing steam turbine 210 drives generator 224 to produce electricity, which is converted by transformer 226 to a suitable form for supply to the grid 228. A portion of the power generated is used for "self-consumption" 230, for example used to power pumps.

In this example a start-up motor and generator unit 232 is available for use in start-up of the system 200. The motor may be a gas piston engine or a gas turbine, for example. The motor and generator unit 232 may also be used more routinely to add to the output of the system 200, by being run, as required to generate electricity. This adds to the flexibility of system 200.

### Heat Recovery and Heat Pump System

Dashed line 234 indicates the use of heat from the flue gas heat recovery and condensation unit to heat the condensate returning via line 214 to the boiler 201.

All the other dashed lines in the figure illustrate recovery of low grade heat from various sources, the upgrading of the heat by heat pumps of the heat pump system and the use of the upgraded heat for various duties.

Thus low grade heat is recovered as indicated by dashed lines 236, 238, 240, 242, 244, 248 and 250 from, respectively: the transformer 226; the generator 238; cooling the turbine 240; the condenser for the turbine 212; flue gas heat recovery and condensation 220, flue gas carbon capture 222; and the motor and generator unit 232.

In this example all the low grade heat recovery is pooled as suggested by linking line 252 as part of a heat pump system 254. The heat pump system includes optional heat storage 256, for example a tank of water.

The heat pump system includes variable drive compressor heat pumps. One or more heat pumps are employed for each duty as follows: at 258 for heating the air input 202 to the boiler; at 260 for heating the condensate returning to the boiler in line 214; and at 262 for drying the biomass fuel 204.

Also included in this figure is the optional use of another heat pump or pumps at 264 for supply of upgraded heat to a district heating system (DH grid 266), accessible if desired by control system 268.

## Claims

1. A power generating system (1) comprising:
a boiler (4), a heat pump system (52) and a condensing steam turbine (2) configured to be fed with steam from the boiler (4), wherein the power generating system (1) is configured such that the air supply for the boiler combustion process is preheated by means of the heat pump system (52) before entry to the boiler (4); **characterized in that** the heat pump system (52) comprises at least one variable drive compressor, and **in that** the at least one variable drive compressor is operable to maintain boiler combustion conditions.

2. The power generating system (1) of claim 1 wherein the heat pump system (52) is configured to extract heat from a cooling system employed to condense the steam from the condensing steam turbine (2) and optionally;
wherein the heat pump system (52) is configured to extract heat from at least one of:
a flue gas cooling and condensation process of the power generating system (1);
waste heat from rotating equipment;
waste heat from transformation equipment;
waste heat from cooling the steam turbine; and
waste heat from ash disposal.

3. The power generating system (1) of claim 1 wherein the heat pump system (52) is configured to extract heat from at least one of: an energy source or sources selected from the group consisting of a solar energy source, a geothermal energy source or a factory process energy source.

4. The power generating system (1) of any preceding claim wherein:
the boiler (4) is a biomass burning boiler; optionally wherein
the boiler (4) is a fluidised bed biomass burning boiler (4); optionally wherein the combustion temperature is controlled, to minimise NOₓ formation.

5. The power generating system (1) of any preceding claim wherein the power generating system (1) is configured such that the heat of the flue gas from the boiler (4) is used to heat the boiler feed water and optionally the condensing steam turbine (2) is not provided with a steam extraction facility for the purpose of boiler feed water preheating.

6. The power generating system (1) of claim 5 wherein the power generating system (1) is configured such that water in the flue gas is condensed by cooling from the boiler feed water and/or by the cooling, heat extraction, side of a heat pump (52) or a heat pump (52) of the heat pump system (52), optionally wherein the power generating system (1) is configured such that the water in the flue gas is substantially fully condensed.

7. The power generating system (1) of claim 6 wherein the power generating system (1) is configured such that water in the flue gas is condensed in a two stage arrangement wherein the power generating system (1) is configured such that the condensate returning from the condensing steam turbine (2) first exchanges heat in a condenser/scrubber arrangement for the flue gas, directly or via a heat pump (52) arrangement, and then exchanges heat with the flue gas exiting from the boiler (4) in a pre-cooler for the condenser/scrubber and optionally;
wherein the power generating system (1) is configured such that heat from at least one of the gas and water from the flue gas, after the pre-cooler and condenser/scrubber, is used to dry or heat the fuel supplied to the boiler (4).

8. The power generating system (1) of any preceding claim wherein the condensing steam turbine (2) is coupled to an electrical generator (26) for generating electricity and optionally wherein a transformer (28) is connected to the electrical generator (26) for supply of electricity to a grid.

9. The power generating system (1) of any preceding claim wherein the power generating system (1) is configured such that the condensate returning from the condensing steam turbine (2) is heated only by heat from the flue gas from the boiler (4) before being fed to the boiler (4).

10. The power generating system (1) of claim 8 wherein the power generating system (1) is configured such that energy provided from at least one of cooling the electrical generator (26) and cooling the transformer (28) is used to pre-heat the condensate returning from the condenser turbine, by direct heat exchange or via a heat pump (52) of the heat pump system (52).

11. The power generating system (1) of any preceding claim wherein more than one condensing steam turbine (2) and/or more than one boiler (4) is provided.

12. The power generating system (1) of any preceding claim further comprising a carbon capture unit; and/or a generator powered by an engine or other means, for starting up and/or augmenting waste heat from the power generating system (1).

13. The power generating system (1) of any preceding claim wherein the working fluid for heat pumps (52) of the heat pump system (52) is selected from the group consisting of carbon dioxide, ammonia, organic fluids and halocarbons.

14. A method for generating power, the method comprising:
providing a power generating system (1) according to any preceding claim;
preheating the air supply for the boiler combustion process by the heat pump system (52), before entry to the boiler (4), to maintain boiler combustion conditions; and
feeding the condensing steam turbine (2) with steam from the boiler (4).

15. The method for generating power according to claim 14 wherein at least one heat pump (52) of the heat pump system (52) also provides active cooling to any equipment within the power generating system (1) that benefits from being operated at a regulated temperature and optionally;
wherein the active cooling is supplied to at least one of: the condensing steam turbine (2), a generator, a transformer (28) or other rotating equipment of the power generating system (1).

## Patentansprüche

1. Stromerzeugungssystem (1), umfassend:
einen Kessel (4), ein Wärmepumpensystem (52) und eine Kondensationsdampfturbine (2), die dazu konfiguriert ist, mit Dampf aus dem Kessel (4) gespeist zu werden, wobei das Stromerzeugungssystem (1) so konfiguriert ist, dass die Lufteinspeisung für den Kesselverbrennungsprozess mittels des Wärmepumpensystems (52) vor Eintritt in den Kessel (4) vorgewärmt wird; **dadurch gekennzeichnet, dass** das Wärmepumpensystem (52) mindestens einen variablen Antriebskompressor umfasst, und dass der mindestens eine variable Antriebskompressor so betrieben werden kann, dass Kesselverbrennungsbedingungen aufrechterhalten werden.

2. Stromerzeugungssystem (1) nach Anspruch 1, wobei das Wärmepumpensystem (52) dazu konfiguriert ist, Wärme aus einem Kühlsystem zu extrahieren, das zur Kondensation des Dampfs aus der Kondensationsdampfturbine (2) verwendet wird, und optional;
wobei das Wärmepumpensystem (52) dazu konfiguriert ist, Wärme aus mindestens einem zu extrahieren von:
einem Rauchgaskühlungs- und Kondensationsprozess des Stromerzeugungssystems (1);
Abwärme von rotierender Ausrüstung;
Abwärme von Umwandlungsausrüstung;
Abwärme von Kühlen der Dampfturbine; und
Abwärme von Ascheentsorgung.

3. Stromerzeugungssystem (1) nach Anspruch 1, wobei das Wärmepumpensystem (52) dazu konfiguriert ist, Wärme aus mindestens einem zu extrahieren von: einer Energiequelle oder -quellen, ausgewählt aus der Gruppe bestehend aus einer Solarenergiequelle, einer Geothermiequelle oder einer Energiequelle aus einem Fabrikprozess.

4. Stromerzeugungssystem (1) nach einem vorstehenden Anspruch, wobei:
der Kessel (4) ein Biomasseverbrennungskessel ist; optional wobei
der Kessel (4) ein Wirbelschicht-Biomasseverbrennungskessel (4) ist; optional wobei die Verbrennungstemperatur gesteuert wird, um eine NOₓ-Bildung zu minimieren.

5. Stromerzeugungssystem (1) nach einem vorstehenden Anspruch, wobei das Stromerzeugungssystem (1) so konfiguriert ist, dass die Wärme des Rauchgases aus dem Kessel (4) verwendet wird, um das Kesselspeisewasser zu erwärmen, und optional die Kondensationsdampfturbine (2) nicht mit einer Dampfextraktionsanlage zum Zweck einer Kesselspeisewasservorwärmung bereitgestellt ist.

6. Stromerzeugungssystem (1) nach Anspruch 5, wobei das Stromerzeugungssystem (1) so konfiguriert ist, dass Wasser im Rauchgas durch Kühlung vom Kesselspeisewasser und/oder durch die Kühlung, Wärmeextraktion, Seite einer Wärmepumpe (52) oder eine Wärmepumpe (52) des Wärmepumpensystems (52) kondensiert wird, optional wobei das Stromerzeugungssystem (1) so konfiguriert ist, dass das Wasser im Rauchgas im Wesentlichen vollständig kondensiert wird.

7. Stromerzeugungssystem (1) nach Anspruch 6, wobei das Stromerzeugungssystem (1) so konfiguriert ist, dass das Wasser im Rauchgas in einer zweistufigen Anordnung kondensiert wird, wobei das Stromerzeugungssystem (1) so konfiguriert ist, dass das von der Kondensationsdampfturbine (2) zurückfließende Kondensat zunächst in einer Kondensator-/Wäscheranordnung für das Rauchgas austauscht, direkt oder über eine
Wärmepumpenanordnung (52) Wärme, und dann Wärme mit dem Rauchgas, das aus dem Kessel (4) austritt, in einem Vorkühler für den Kondensator/Wäscher austauscht;
wobei das Stromerzeugungssystem (1) so konfiguriert ist, dass Wärme aus mindestens einem vom Gas und Wasser aus dem Rauchgas, nach dem Vorkühler und Kondensator/Wäscher, verwendet wird, um den dem Kessel (4) eingespeisten Brennstoff zu trocknen oder zu erwärmen.

8. Stromerzeugungssystem (1) nach einem vorstehenden Anspruch, wobei die Kondensationsdampfturbine (2) mit einem elektrischen Generator (26) zum Erzeugen von Elektrizität gekoppelt ist, und optional wobei ein Transformator (28) mit dem elektrischen Generator (26) zum Einspeisen von Elektrizität in ein Netz verbunden ist.

9. Stromerzeugungssystem (1) nach einem vorstehenden Anspruch, wobei das Stromerzeugungssystem (1) so konfiguriert ist, dass das von der Kondensationsdampfturbine (2) zurückfließende Kondensat nur durch Wärme des Rauchgases aus dem Kessel (4) erwärmt wird, bevor es in den Kessel (4) zugeführt wird.

10. Stromerzeugungssystem (1) nach Anspruch 8, wobei das Stromerzeugungssystem (1) so konfiguriert ist, dass Energie, die von mindestens einer der Kühlung des elektrischen Generators (26) und Kühlung des Transformators (28) bereitgestellt wird, verwendet wird, um das von der Kondensatorturbine zurückfließende Kondensat durch direkten Wärmeaustausch oder über eine Wärmepumpe (52) des Wärmepumpensystems (52) vorzuwärmen.

11. Stromerzeugungssystem (1) nach einem vorstehenden Anspruch, wobei mehr als eine Kondensationsdampfturbine (2) und/oder mehr als ein Kessel (4) bereitgestellt ist.

12. Stromerzeugungssystem (1) nach einem vorstehenden Anspruch, ferner umfassend eine Kohlenstoffabscheidungseinheit; und/oder einen Generator, der von einem Motor oder anderen Mittel angetrieben wird, zum Starten und/oder Ergänzen von Abwärme des Stromerzeugungssystems (1).

13. Stromerzeugungssystem (1) nach einem vorstehenden Anspruch, wobei das Arbeitsfluid für Wärmepumpen (52) des Wärmepumpensystems (52) aus der Gruppe ausgewählt ist, bestehend aus Kohlendioxid, Ammoniak, organischen Fluiden und Halogenkohlenwasserstoffen.

14. Verfahren zur Stromerzeugung, wobei das Verfahren umfasst:
Bereitstellen eines Stromerzeugungssystems (1) nach einem vorstehenden Anspruch;
Vorwärmen der Lufteinspeisung für den Kesselverbrennungsprozess durch das Wärmepumpensystem (52) vor Eintritt in den Kessel (4), um Kesselverbrennungsbedingungen aufrechtzuerhalten; und
Einspeisen von Dampf aus dem Kessel (4) in die Kondensationsdampfturbine (2).

15. Verfahren zur Stromerzeugung nach Anspruch 14, wobei mindestens eine Wärmepumpe (52) des Wärmepumpensystems (52) auch eine aktive Kühlung für jegliche Ausrüstung innerhalb des Stromerzeugungssystems (1) bereitstellt, die davon profitiert, bei einer geregelten Temperatur betrieben zu werden, und optional;
wobei die aktive Kühlung in mindestens eines eingespeist wird von: der Kondensationsdampfturbine (2), einem Generator, einem Transformator (28) oder anderer rotierender Ausrüstung des Stromerzeugungssystems (1).

## Revendications

1. Système de production d'énergie (1) comprenant :
une chaudière (4), un système de pompe à chaleur (52) et une turbine à vapeur à condensation (2) configurée pour être alimentée en vapeur provenant de la chaudière (4), dans lequel le système de production d'énergie (1) est configuré de telle sorte que l'amenée d'air pour le processus de combustion de chaudière est préchauffé au moyen du système de pompe à chaleur (52) avant l'entrée dans la chaudière (4) ; **caractérisé en ce que** le système de pompe à chaleur (52) comprend au moins un compresseur à entraînement variable et **en ce que** l'au moins un compresseur à entraînement variable est conçu pour maintenir des conditions de combustion de chaudière.

2. Système de production d'énergie (1) selon la revendication 1 dans lequel le système de pompe à chaleur (52) est configuré pour extraire de la chaleur d'un système de refroidissement employé pour condenser la vapeur de la turbine à vapeur à condensation (2) et facultativement ;
dans lequel le système de pompe à chaleur (52) est configuré pour extraire de la chaleur d'au moins un parmi :
un processus de refroidissement et de condensation de gaz de combustion du système de production d'énergie (1) ;
de la chaleur résiduelle provenant d'équipements rotatifs ;
de la chaleur résiduelle provenant d'équipements de transformation ;
de la chaleur résiduelle provenant du refroidissement de la turbine à vapeur ; et
de la chaleur résiduelle provenant de l'élimination des cendres.

3. Système de production d'énergie (1) selon la revendication 1 dans lequel le système de pompe à chaleur (52) est configuré pour extraire de la chaleur d'au moins une parmi : une source ou des sources d'énergie sélectionnées à partir du groupe constitué d'une source d'énergie solaire, d'une source d'énergie géothermique ou d'une source d'énergie de processus industriel.

4. Système de production d'énergie (1) selon une quelconque revendication précédente dans lequel :
la chaudière (4) est une chaudière à biomasse ; facultativement dans lequel
la chaudière (4) est une chaudière à combustion de biomasse à lit fluidisé (4) ; facultativement dans lequel la température de combustion est contrôlée, pour minimiser la formation de NOₓ.

5. Système de production d'énergie (1) selon une quelconque revendication précédente dans lequel le système de production d'énergie (1) est configuré de telle sorte que la chaleur des gaz de combustion provenant de la chaudière (4) est utilisée pour chauffer l'eau d'alimentation de chaudière et facultativement la turbine à vapeur à condensation (2) n'est pas munie d'une installation d'extraction de vapeur destinée au préchauffage d'eau d'alimentation de chaudière.

6. Système de production d'énergie (1) selon la revendication 5, dans lequel le système de production d'énergie (1) est configuré de telle sorte que de l'eau contenue dans les gaz de combustion est condensée par refroidissement à partir de l'eau d'alimentation de chaudière et/ou par le côté refroidissement, extraction de chaleur d'une pompe à chaleur (52) ou d'une pompe à chaleur (52) du système de pompe à chaleur (52), facultativement dans lequel le système de production d'énergie (1) est configuré de telle sorte que l'eau dans les gaz de combustion est pratiquement entièrement condensée.

7. Système de production d'énergie (1) selon la revendication 6, dans lequel le système de production d'énergie (1) est configuré de telle sorte que l'eau contenue dans les gaz de combustion est condensée dans un agencement en deux étapes dans lequel le système de production d'énergie (1) est configuré de telle sorte que le condensat revenant de la turbine à vapeur à condensation (2) échange d'abord de la chaleur dans un agencement de condensation/épuration pour les gaz de combustion, directement ou via un agencement de pompe à chaleur (52) puis échange de la chaleur avec les gaz de combustion sortant de la chaudière (4) dans un prérefroidisseur pour le condensateur/épurateur et facultativement ;
dans lequel le système de production d'énergie (1) est configuré de telle sorte que la chaleur d'au moins un parmi les gaz et l'eau des gaz de combustion, après le prérefroidisseur et condensateur/épurateur, est utilisé pour sécher ou chauffer le combustible fourni à la chaudière (4).

8. Système de production d'énergie (1) selon une quelconque revendication précédente dans lequel la turbine à vapeur à condensation (2) est couplée à un générateur électrique (26) pour produire de l'électricité et facultativement dans lequel un transformateur (28) est connecté au générateur électrique (26) pour amener de l'électricité à un réseau.

9. Système de production d'énergie (1) selon une quelconque revendication précédente dans lequel le système de production d'énergie (1) est configuré de telle sorte que le condensat revenant de la turbine à vapeur à condensation (2) est chauffé uniquement par de la chaleur des gaz de combustion provenant de la chaudière (4) avant d'être alimenté dans la chaudière (4).

10. Système de production d'énergie (1) selon la revendication 8, dans lequel le système de production d'énergie (1) est configuré de telle sorte que l'énergie fournie par au moins un parmi un refroidissement du générateur électrique (26) et un refroidissement du transformateur (28) est utilisée pour préchauffer le condensat revenant de la turbine de condenseur, par échange de chaleur direct ou via une pompe à chaleur (52) du système de pompe à chaleur (52).

11. Système de production d'énergie (1) selon une quelconque revendication précédente dans lequel plus d'une turbine à vapeur à condensation (2) et/ou plus d'une chaudière (4) sont prévues.

12. Système de production d'énergie (1) selon une quelconque revendication précédente comprenant en outre une unité de capture de carbone ; et/ou un générateur alimenté par un moteur ou tout autre moyen, pour le démarrage et/ou l'augmentation de la chaleur résiduelle du système de production d'énergie (1).

13. Système de production d'énergie (1) selon une quelconque revendication précédente dans lequel le fluide de travail pour les pompes à chaleur (52) du système de pompe à chaleur (52) est sélectionné à partir du groupe constitué de dioxyde de carbone, d'ammoniac, de fluides organiques et d'halocarbures.

14. Procédé de production d'énergie, le procédé comprenant :
la fourniture d'un système de production d'énergie (1) selon une quelconque revendication précédente ;
le préchauffage de l'amenée d'air pour le processus de combustion de chaudière par le système de pompe à chaleur (52), avant l'entrée dans la chaudière (4), pour maintenir des conditions de combustion de chaudière ; et
l'alimentation de la turbine à vapeur à condensation (2) avec de la vapeur provenant de la chaudière (4).

15. Procédé pour produire de l'énergie selon la revendication 14 dans lequel au moins une pompe à chaleur (52) du système de pompe à chaleur (52) fournit également un refroidissement actif à un quelconque équipement au sein du système de production d'énergie (1) qui bénéficie d'un fonctionnement à une température régulée et facultativement ;
dans lequel le refroidissement actif est amené à au moins un parmi : la turbine à vapeur à condensation (2), un générateur, un transformateur (28) ou tout autre équipement rotatif du système de production d'énergie (1).
